# EUROPEAN PATENT APPLICATION

(11) **EP 4 779 220 A1**
(43) Date of publication of application: **22.07.2026**
(21) Application number: 23952160.2
(22) Date of filing: 11.09.2023
(51) Int. Cl.: F24F 7/08, F24F 7/007

(54) **HEAT EXCHANGE-TYPE VENTILATION DEVICE**

(71) Applicant: MITSUBISHI ELECTRIC CORPORATION, Chiyoda-ku Tokyo 100-8310 (JP)
(72) Inventor: TSUBOYA Tomoki, Tokyo 100-8310 (JP); HASEGAWA Kohei, Tokyo 100-8310 (JP); DOI Atsuo, Tokyo 100-8310 (JP); OGATA Kenya, Tokyo 100-8310 (JP); KUWANA Shingo, Tokyo 100-8310 (JP); MORIKAWA Masaki, Tokyo 102-8404 (JP)
(74) Representative: Mewburn Ellis LLP
(86) International application number: PCT/JP2023/032985
(87) International publication number: WO 2025/057263

(57) **Abstract**

In a heat exchange ventilation device, a heat exchange device includes a first heat exchanger and a second heat exchanger. A supply-side air blowing device includes a first supply air blower and a second supply air blower. A discharge-side air blowing device includes a first exhaust air blower and a second exhaust air blower. A control device is configured to control the supply-side air blowing device and the discharge-side air blowing device so that an amount of intersection between supply-side air and discharge-side air in each of the first heat exchanger and the second heat exchanger is smaller in a normal ventilation mode than in a heat exchange ventilation mode.

## Description

### Technical Field

This disclosure relates to a heat exchange ventilation device.

### Background Art

In a related-art heat exchange ventilation device, when a preliminary cooling operation is started by an air conditioner, in a case in which the outdoor temperature is lower than the indoor temperature, a normal ventilation operation is started. In the normal ventilation operation, at least one of a supply air passage or an exhaust air passage becomes an air passage that bypasses a heat exchanger (see, for example, Patent Literature 1).

### Citation List

### Patent Literature

[PTL 1] JP 2021-89098 A

### Summary of Invention

### Technical Problem

In the related-art heat exchange ventilation device as described above, an air passage bypassing the heat exchanger is formed in the normal ventilation operation. Accordingly, it is required to secure an air passage that does not pass through the heat exchanger, and an air passage switching mechanism, resulting in an increase in the size of the entire device.

This disclosure has been made to solve the problem as described above, and has an object to provide a heat exchange ventilation device that enables suppressing an increase in the size of the entire device.

### Solution to Problem

A heat exchange ventilation device according to this disclosure includes: a casing in which a supply air passage from an outdoor area to an indoor area and an exhaust air passage from the indoor area to the outdoor area are formed; a heat exchange device which is provided in the casing and is configured to perform heat exchange between supply-side air which is air flowing through the supply air passage and discharge-side air which is air flowing through the exhaust air passage; a supply-side air blowing device provided in the supply air passage; a discharge-side air blowing device provided in the exhaust air passage; and a control device configured to control the supply-side air blowing device and the discharge-side air blowing device by a plurality of operation modes including a heat exchange ventilation mode and a normal ventilation mode. The heat exchange device includes a first heat exchanger and a second heat exchanger which are arranged in parallel to each other. The supply-side air blowing device includes a first supply air blower and a second supply air blower. The discharge-side air blowing device includes a first exhaust air blower and a second exhaust air blower. The supply air passage includes: a first downstream air supply passage formed between the first heat exchanger and the first supply air blower; and a second downstream air supply passage formed between the second heat exchanger and the second supply air blower independently of the first downstream air supply passage. The exhaust air passage includes: a first downstream exhaust passage formed between the first heat exchanger and the first exhaust air blower; and a second downstream exhaust passage formed between the second heat exchanger and the second exhaust air blower independently of the first downstream exhaust passage. The control device is configured to control the first supply air blower, the second supply air blower, the first exhaust air blower, and the second exhaust air blower so that an amount of intersection between the supply-side air and the discharge-side air in each of the first heat exchanger and the second heat exchanger is smaller in the normal ventilation mode than in the heat exchange ventilation mode.

### Advantageous Effects of Invention

According to the heat exchange ventilation device of this disclosure, it is possible to suppress the increase in the size of the entire device.

### Brief Description of Drawings

FIG. 1 is a perspective view for illustrating an external appearance of a heat exchange ventilation device according to a first embodiment.
FIG. 2 is a plan view for illustrating the heat exchange ventilation device of FIG. 1.
FIG. 3 is a side view of the heat exchange ventilation device as viewed in the direction of the arrow III in FIG. 2.
FIG. 4 is a side view of the heat exchange ventilation device as viewed in the direction of the arrow VI in FIG. 2.
FIG. 5 is a perspective view for illustrating an internal component accommodated in a casing of FIG. 1.
FIG. 6 is a side view for illustrating the internal component of FIG. 5.
FIG. 7 is a plan view for illustrating a supply air passage in the heat exchange ventilation device of FIG. 5.
FIG. 8 is a plan view for illustrating an exhaust air passage in the heat exchange ventilation device of FIG. 5.
FIG. 9 is a cross-sectional view for illustrating flows of supply-side air and discharge-side air in a heat exchange device of FIG. 5.
FIG. 10 is a plan view for illustrating a flow of supply-side air and a flow of discharge-side air in a normal ventilation mode in the first embodiment.
FIG. 11 is a block diagram for illustrating a control system of the heat exchange ventilation device according to the first embodiment.
FIG. 12 is a flowchart for illustrating operation mode selection processing performed by a control device of FIG. 11.
FIG. 13 is a perspective view for illustrating an internal component of a heat exchange ventilation device according to a second embodiment.
FIG. 14 is a side view for illustrating the internal component of FIG. 13.
FIG. 15 is a plan view for illustrating a supply air passage in the heat exchange ventilation device of FIG. 13.
FIG. 16 is a plan view for illustrating an exhaust air passage in the heat exchange ventilation device of FIG. 13.
FIG. 17 is a cross-sectional view for illustrating flows of supply-side air and discharge-side air in a heat exchange device of FIG. 13.
FIG. 18 is a plan view for illustrating a flow of supply-side air and a flow of discharge-side air in the normal ventilation mode in the second embodiment.
FIG. 19 is a perspective view for illustrating a main part of a heat exchange ventilation device according to a fourth embodiment.
FIG. 20 is a perspective view for illustrating a state in which a shutter of FIG. 19 is closed.
FIG. 21 is a configuration diagram for illustrating a first example of a processing circuit for implementing each of functions of a control device in the first embodiment to a fifth embodiment.
FIG. 22 is a configuration diagram for illustrating a second example of the processing circuit for implementing each of the functions of the control device in the first embodiment to the fifth embodiment.

### Description of Embodiments

Now, embodiments of this disclosure are described with reference to the drawings.

### First Embodiment

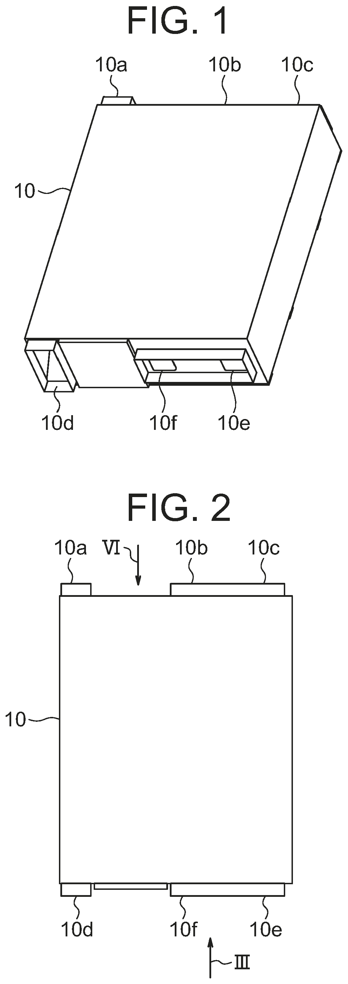

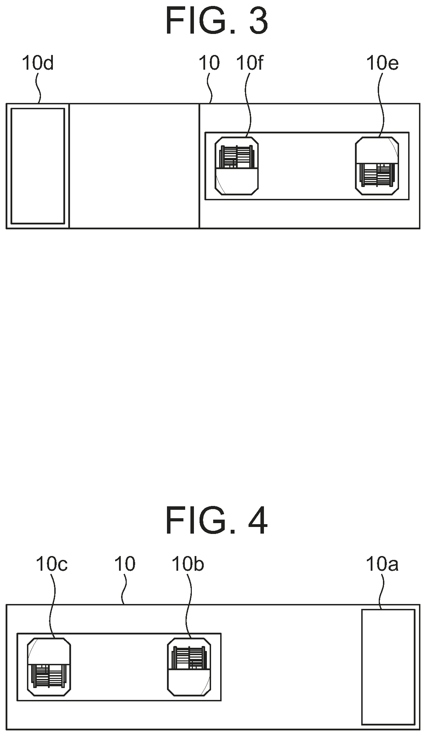

FIG. 1 is a perspective view for illustrating an external appearance of a heat exchange ventilation device according to a first embodiment. FIG. 2 is a plan view for illustrating the heat exchange ventilation device of FIG. 1. FIG. 3 is a side view of the heat exchange ventilation device as viewed in the direction of the arrow III in FIG. 2. FIG. 4 is a side view of the heat exchange ventilation device as viewed in the direction of the arrow VI in FIG. 2.

The heat exchange ventilation device includes a casing 10. An outer shape of the casing 10 is, for example, a cuboid. The casing 10 is arranged to face an indoor area and an outdoor area. The indoor area is an internal space of a room to be ventilated. The outdoor area is an external space of the room to be ventilated, for example, an outdoor space, another room adjacent to the room to be ventilated, or a space such as a corridor.

An indoor suction port 10a, a first indoor air supply port 10b, and a second indoor air supply port 10c are formed in a side surface facing the indoor area, among four side surfaces of the casing 10. An outdoor suction port 10d, a first outdoor exhaust port 10e, and a second outdoor exhaust port 10f are formed in a side surface facing the outdoor area, among the four side surfaces of the casing 10.

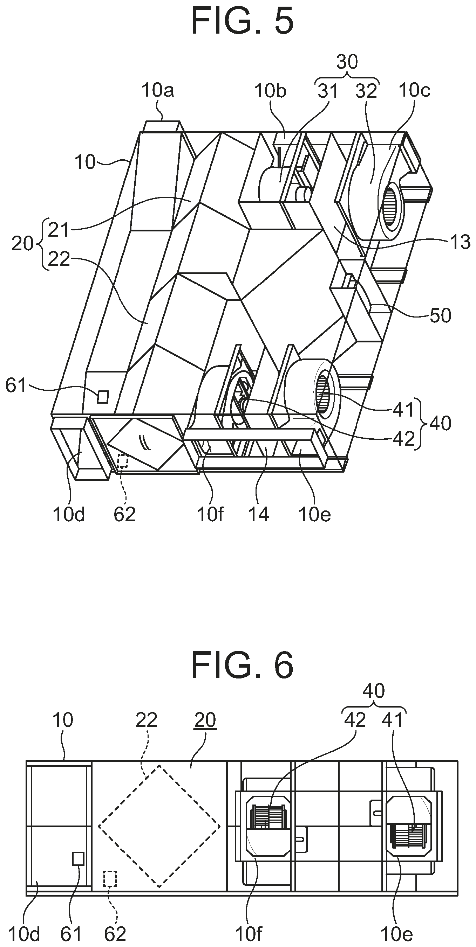

FIG. 5 is a perspective view for illustrating an internal component accommodated in the casing 10 of FIG. 1. FIG. 6 is a side view for illustrating the internal component of FIG. 5.

The heat exchange ventilation device further includes, as the internal component, a heat exchange device 20, a supply-side air blowing device 30, a discharge-side air blowing device 40, a control device 50, an outdoor temperature sensor 61, and an indoor temperature sensor 62, in addition to the casing 10.

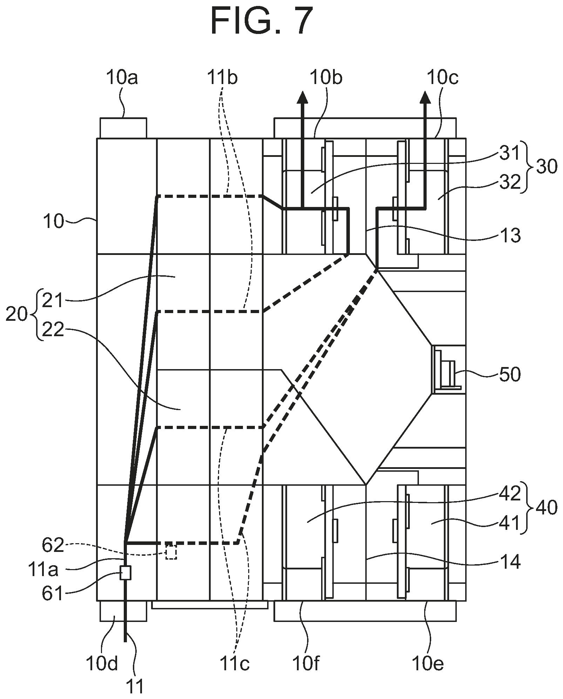

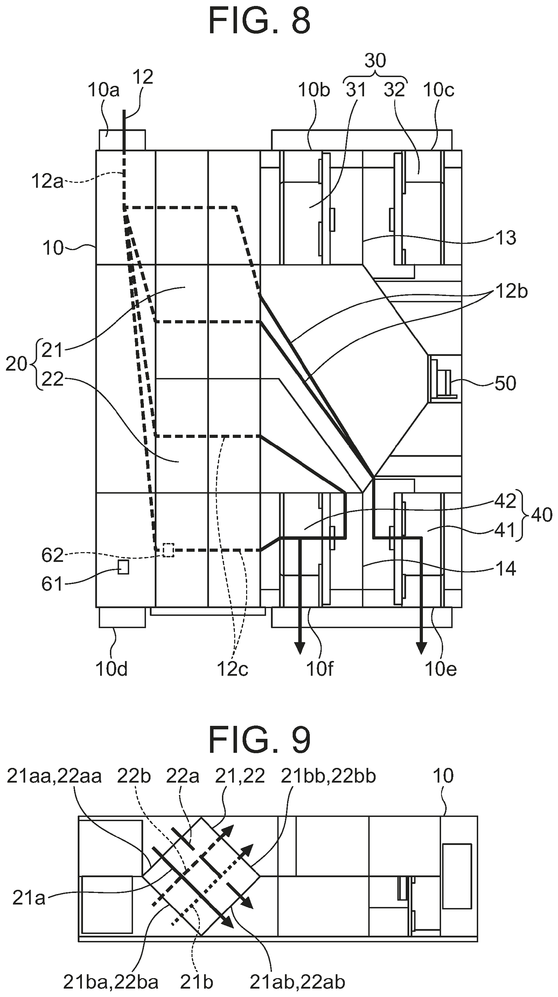

A supply air passage 11 as indicated by an arrow in FIG. 7 and an exhaust air passage 12 as indicated by an arrow in FIG. 8 are formed inside the casing 10.

The supply air passage 11 is an air passage connecting the outdoor suction port 10d to each of the first indoor air supply port 10b and the second indoor air supply port 10c. That is, the supply air passage 11 is an air flow passage from the outdoor area to the indoor area. Air taken in from the outdoor area through the outdoor suction port 10d flows through the supply air passage 11, and is supplied into the indoor area from the first indoor air supply port 10b and the second indoor air supply port 10c.

The exhaust air passage 12 is an air passage connecting the indoor suction port 10a to each of the first outdoor exhaust port 10e and the second outdoor exhaust port 10f. That is, the exhaust air passage 12 is an air flow passage from the indoor area to the outdoor area. Air taken in from the indoor area through the indoor suction port 10a flows through the exhaust air passage 12, and is discharged to the outdoor area from the first outdoor exhaust port 10e and the second outdoor exhaust port 10f.

The heat exchange device 20 is provided inside the casing 10. Further, the heat exchange device 20 performs heat exchange between supply-side air and discharge-side air. The supply-side air is air flowing through the supply air passage 11. The discharge-side air is air flowing through the exhaust air passage 12.

Further, the heat exchange device 20 includes a first heat exchanger 21 and a second heat exchanger 22. The first heat exchanger 21 and the second heat exchanger 22 are arranged in parallel to each other in the middle of the supply air passage 11 and the exhaust air passage 12.

The supply-side air blowing device 30 is provided in the supply air passage 11. Further, the supply-side air blowing device 30 includes a first supply air blower 31 and a second supply air blower 32. The first supply air blower 31 sends the supply-side air into the indoor area from the first indoor air supply port 10b. The second supply air blower 32 sends the supply-side air into the indoor area from the second indoor air supply port 10c.

The supply air passage 11 is branched into a plurality of air passages at the heat exchange device 20. That is, as illustrated in FIG. 7, the supply air passage 11 includes an upstream air supply passage 11a, a first downstream air supply passage 11b, and a second downstream air supply passage 11c.

The upstream air supply passage 11a is an air passage located upstream of the heat exchange device 20. The first downstream air supply passage 11b is an air passage formed between the first heat exchanger 21 and the first supply air blower 31. The second downstream air supply passage 11c is an air passage formed between the second heat exchanger 22 and the second supply air blower 32 independently of the first downstream air supply passage 11b. An air supply passage partition wall 13 is provided between the first downstream air supply passage 11b and the second downstream air supply passage 11c.

The discharge-side air blowing device 40 is provided in the exhaust air passage 12. The discharge-side air blowing device 40 includes a first exhaust air blower 41 and a second exhaust air blower 42. The first exhaust air blower 41 discharges the discharge-side air to the outdoor area from the first outdoor exhaust port 10e. The second exhaust air blower 42 discharges the discharge-side air to the outdoor area from the second outdoor exhaust port 10f.

The exhaust air passage 12 is branched into a plurality of air passages at the heat exchange device 20. That is, as illustrated in FIG. 8, the exhaust air passage 12 includes an upstream exhaust passage 12a, a first downstream exhaust passage 12b, and a second downstream exhaust passage 12c.

The upstream exhaust passage 12a is an air passage located upstream of the heat exchange device 20. The first downstream exhaust passage 12b is an air passage formed between the first heat exchanger 21 and the first exhaust air blower 41. The second downstream exhaust passage 12c is an air passage formed between the second heat exchanger 22 and the second exhaust air blower 42 independently of the first downstream exhaust passage 12b. An exhaust passage partition wall 14 is provided between the first downstream exhaust passage 12b and the second downstream exhaust passage 12c.

FIG. 9 is a cross-sectional view for illustrating flows of supply-side air and discharge-side air in the heat exchange device 20 of FIG. 5. A first air supply flow passage 21a and a first exhaust flow passage 21b are formed in the first heat exchanger 21 independently of each other. A second air supply flow passage 22a and a second exhaust flow passage 22b are formed in the second heat exchanger 22 independently of each other.

The first air supply flow passage 21a is a part of the first downstream air supply passage 11b. The second air supply flow passage 22a is a part of the second downstream air supply passage 11c. The first exhaust flow passage 21b is a part of the first downstream exhaust passage 12b. The second exhaust flow passage 22b is a part of the second downstream exhaust passage 12c.

The first heat exchanger 21 includes a first air supply inlet 21aa, a first air supply outlet 21ab, a first exhaust inlet 21ba, and a first exhaust outlet 21bb. The first air supply inlet 21aa is an inlet of the first air supply flow passage 21a. The first air supply outlet 21ab is an outlet of the first air supply flow passage 21a. The first exhaust inlet 21ba is an inlet of the first exhaust flow passage 21b. The first exhaust outlet 21bb is an outlet of the first exhaust flow passage 21b.

The second heat exchanger 22 includes a second air supply inlet 22aa, a second air supply outlet 22ab, a second exhaust inlet 22ba, and a second exhaust outlet 22bb. The second air supply inlet 22aa is an inlet of the second air supply flow passage 22a. The second air supply outlet 22ab is an outlet of the second air supply flow passage 22a. The second exhaust inlet 22ba is an inlet of the second exhaust flow passage 22b. The second exhaust outlet 22bb is an outlet of the second exhaust flow passage 22b.

The first air supply inlet 21aa and the second air supply inlet 22aa are connected in parallel to the upstream air supply passage 11a. The first exhaust inlet 21ba and the second exhaust inlet 22ba are connected in parallel to the upstream exhaust passage 12a.

The outdoor temperature sensor 61 is provided in the supply air passage 11 between the outdoor suction port 10d and the heat exchange device 20. The outdoor temperature sensor 61 detects a temperature of the supply-side air taken in from the outdoor suction port 10d.

The indoor temperature sensor 62 is provided in the exhaust air passage 12 between the indoor suction port 10a and the heat exchange device 20. The indoor temperature sensor 62 detects a temperature of the discharge-side air taken in from the indoor suction port 10a.

The control device 50 is provided in the casing 10. The control device 50 controls the supply-side air blowing device 30 and the discharge-side air blowing device 40 by a plurality of operation modes. The plurality of operation modes include a heat exchange ventilation mode and a normal ventilation mode.

The heat exchange ventilation mode is an operation mode in which the heat exchange device 20 actively performs heat exchange between the discharge-side air and the supply-side air. The normal ventilation mode is an operation mode in which the heat exchange by the heat exchange device 20 is not performed, or a heat exchange rate in the heat exchange device 20 is reduced as compared to the heat exchange ventilation mode.

The control device 50 switches the operation mode based on a signal from the outdoor temperature sensor 61 and a signal from the indoor temperature sensor 62.

An air conditioner (not shown) is installed in the indoor area. The control device 50 sets the operation mode to the heat exchange ventilation mode when a temperature of the discharge-side air is lower than a temperature of the supply-side air during a cooling operation of the air conditioner. Further, the control device 50 sets the operation mode to the heat exchange ventilation mode also when the temperature of the discharge-side air is higher than the temperature of the supply-side air during a heating operation of the air conditioner. In this manner, a load on the air conditioner is reduced.

The control device 50 sets the operation mode to the normal ventilation mode when the temperature of the discharge-side air is equal to or higher than the temperature of the supply-side air during the cooling operation of the air conditioner. Further, the control device 50 sets the operation mode to the normal ventilation mode also when the temperature of the discharge-side air is equal to or lower than the temperature of the supply-side air during the heating operation of the air conditioner. In this manner, an increase in the load on the air conditioner is suppressed.

In the normal ventilation mode, the control device 50 controls the supply-side air blowing device 30 and the discharge-side air blowing device 40 so that an amount of intersection between the supply-side air and the discharge-side air in each of the first heat exchanger 21 and the second heat exchanger 22 is smaller than that in the heat exchange ventilation mode. At this time, the control device 50 controls the first supply air blower 31, the second supply air blower 32, the first exhaust air blower 41, and the second exhaust air blower 42 individually.

Specifically, in the heat exchange ventilation mode, the control device 50 operates all of the first supply air blower 31, the second supply air blower 32, the first exhaust air blower 41, and the second exhaust air blower 42. Accordingly, the supply-side air flows as illustrated in FIG. 7, and the discharge-side air flows as illustrated in FIG. 8. Heat exchange is performed in both of the first heat exchanger 21 and the second heat exchanger 22.

Further, in the normal ventilation mode, the control device 50 operates the first supply air blower 31 and the second exhaust air blower 42, and stops the second supply air blower 32 and the first exhaust air blower 41.

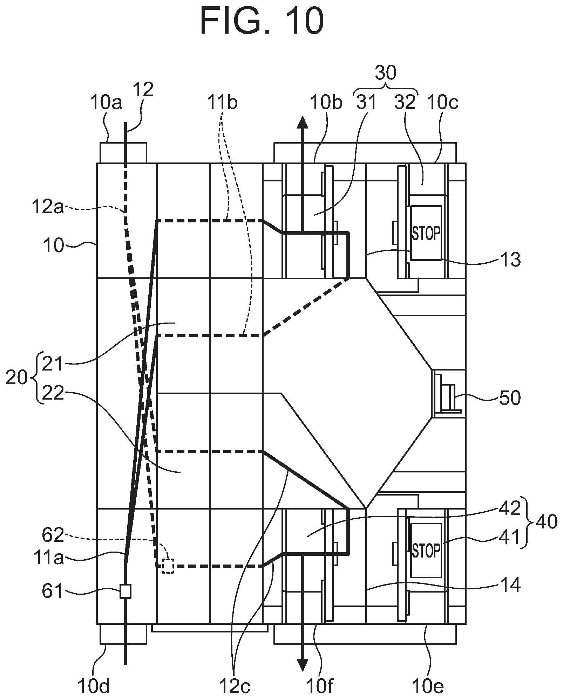

FIG. 10 is a plan view for illustrating a flow of the supply-side air and a flow of the discharge-side air in the normal ventilation mode in the first embodiment. In the normal ventilation mode, the supply-side air does not flow through the second downstream air supply passage 11c because the second supply air blower 32 is stopped. Accordingly, the supply-side air does not flow through the second heat exchanger 22, but flows only through the first heat exchanger 21.

Further, in the normal ventilation mode, the discharge-side air does not flow through the first downstream exhaust passage 12b because the first exhaust air blower 41 is stopped. Accordingly, the discharge-side air does not flow through the first heat exchanger 21, but flows only through the second heat exchanger 22.

Accordingly, in the normal ventilation mode, only the supply-side air flows through the first heat exchanger 21, and only the discharge-side air flows through the second heat exchanger 22. That is, in the normal ventilation mode, the supply-side air and the discharge-side air do not intersect in any of the first heat exchanger 21 and the second heat exchanger 22, and heat exchange between the supply-side air and the discharge-side air is not performed.

Further, when the operation mode is changed from the heat exchange ventilation mode to the normal ventilation mode, the control device 50 increases each of an air flow rate by the first supply air blower 31 and an air flow rate by the second exhaust air blower 42, as compared to that before the change.

In this example, when the operation mode is changed from the heat exchange ventilation mode to the normal ventilation mode, the control device 50 increases each of the air flow rate by the first supply air blower 31 and the air flow rate by the second exhaust air blower 42 to twice that before the change.

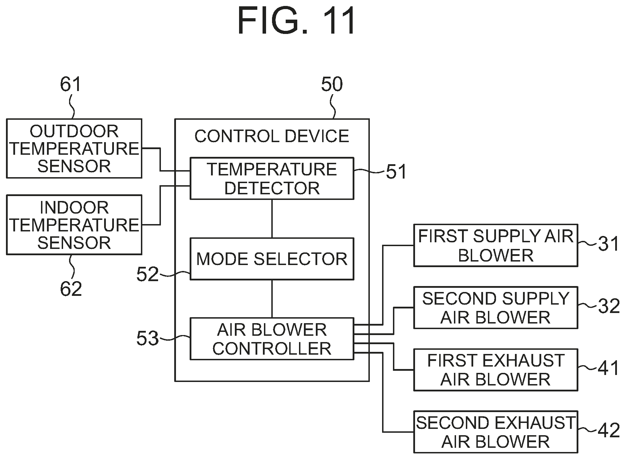

FIG. 11 is a block diagram for illustrating a control system of the heat exchange ventilation device according to the first embodiment. The control device 50 includes a temperature detector 51, a mode selector 52, and an air blower controller 53 as functional blocks.

The temperature detector 51 detects the temperature of the supply-side air based on the signal from the outdoor temperature sensor 61. Further, the temperature detector 51 detects the temperature of the discharge-side air based on the signal from the indoor temperature sensor 62.

The mode selector 52 selects the operation mode based on an operation state of the air conditioner, the temperature of the supply-side air, and the temperature of the discharge-side air. Further, the mode selector 52 maintains the current operation mode when the selected operation mode is the current operation mode. Further, the mode selector 52 switches the current operation mode to the selected operation mode when the selected operation mode is not the current operation mode.

The air blower controller 53 controls the first supply air blower 31, the second supply air blower 32, the first exhaust air blower 41, and the second exhaust air blower 42 individually in accordance with the operation mode selected by the mode selector 52.

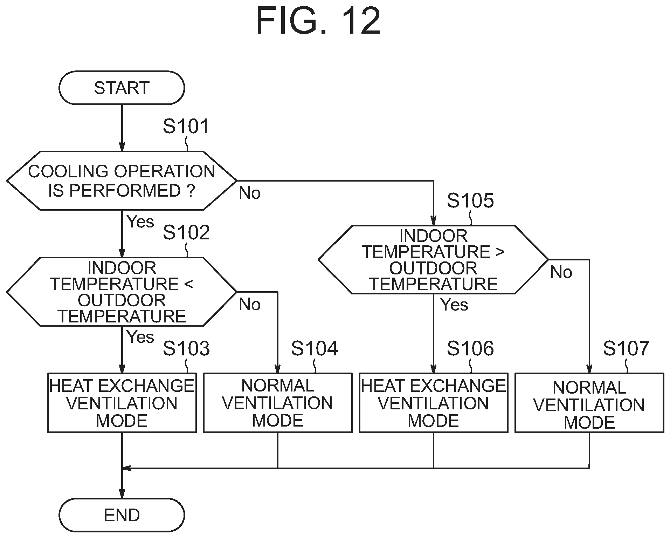

FIG. 12 is a flowchart for illustrating operation mode selection processing performed by the control device 50 of FIG. 11. The control device 50 repeatedly executes the operation mode selection processing of FIG. 12 during the operation of the air conditioner.

When the operation mode selection processing is started, the control device 50 determines, in Step S101, whether or not the air conditioner is performing a cooling operation. Information on whether or not the air conditioner is performing the cooling operation is, for example, automatically transmitted from the air conditioner to the control device 50. Further, the information on whether or not the air conditioner is performing the cooling operation may be input to the control device 50 by a user.

When the air conditioner is performing the cooling operation, the control device 50 determines, in Step S102, whether or not the temperature of the discharge-side air is lower than the temperature of the supply-side air, that is, whether or not the indoor temperature is lower than the outdoor temperature.

When the indoor temperature is lower than the outdoor temperature, in Step S103, the control device 50 selects the heat exchange ventilation mode as the operation mode, and ends the processing for that cycle. When the indoor temperature is not lower than the outdoor temperature, in Step S104, the control device 50 selects the normal ventilation mode as the operation mode, and ends the processing for that cycle.

In the process step of Step S101, when it is determined that the air conditioner is not performing the cooling operation, the control device 50 determines that the air conditioner is performing a heating operation. Then, the control device 50 determines, in Step S105, whether or not the temperature of the discharge-side air is higher than the temperature of the supply-side air, that is, whether or not the indoor temperature is higher than the outdoor temperature.

When the indoor temperature is higher than the outdoor temperature, in Step S106, the control device 50 selects the heat exchange ventilation mode as the operation mode, and ends the processing for that cycle. When the indoor temperature is not higher than the outdoor temperature, in Step S107, the control device 50 selects the normal ventilation mode as the operation mode, and ends the processing for that cycle.

In the heat exchange ventilation device as described above, the first heat exchanger 21 and the second heat exchanger 22 are arranged in parallel to each other. Further, the supply-side air blowing device 30 includes the first supply air blower 31 and the second supply air blower 32. Further, the discharge-side air blowing device 40 includes the first exhaust air blower 41 and the second exhaust air blower 42.

Further, the supply air passage 11 includes the first downstream air supply passage 11b and the second downstream air supply passage 11c. Further, the exhaust air passage 12 includes the first downstream exhaust passage 12b and the second downstream exhaust passage 12c.

Further, in the normal ventilation mode, the control device 50 controls the supply-side air blowing device 30 and the discharge-side air blowing device 40 so that the amount of intersection between the supply-side air and the discharge-side air in each of the first heat exchanger 21 and the second heat exchanger 22 is smaller than that in the heat exchange ventilation mode.

Thus, it is not required to secure an air passage that does not pass through the heat exchange device 20, and a mechanism for switching to that air passage. Accordingly, it is possible to suppress an increase in the size of the entire device while suppressing an increase in the load on the air conditioner.

Further, it is also possible to suppress an increase in the number of components and suppress an increase in pressure loss.

Further, in the normal ventilation mode, the control device 50 operates the first supply air blower 31 and the second exhaust air blower 42, and stops the second supply air blower 32 and the first exhaust air blower 41. Accordingly, an increase in the load on the air conditioner can be suppressed more reliably.

When the operation mode is changed from the heat exchange ventilation mode to the normal ventilation mode, the control device 50 increases each of the air flow rate by the first supply air blower 31 and the air flow rate by the second exhaust air blower 42, as compared to that before the change. In this manner, a decrease in total air flow rate in the normal ventilation mode can be suppressed.

In particular, with each of the air flow rate by the first supply air blower 31 and the air flow rate by the second exhaust air blower 42 being increased to twice that before the change, the total air flow rates before and after the change of the operation mode can be made equal to each other.

### Second Embodiment

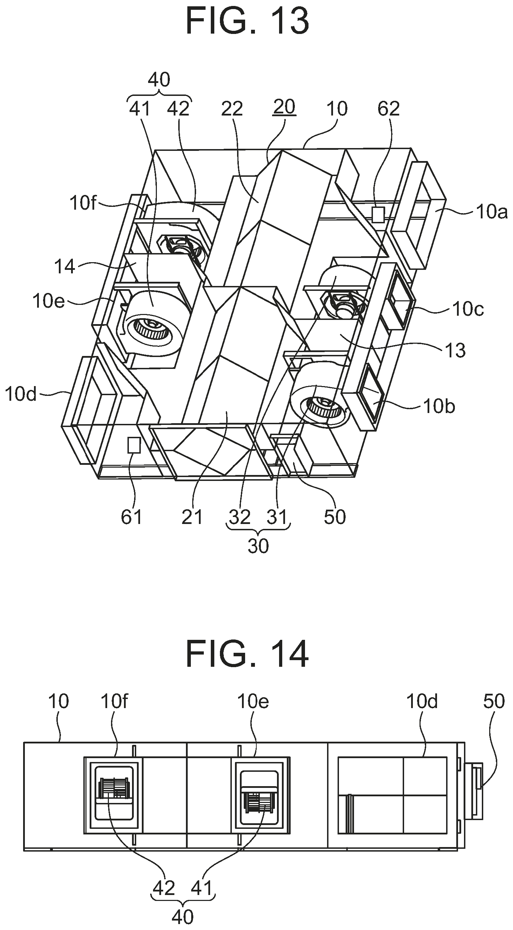

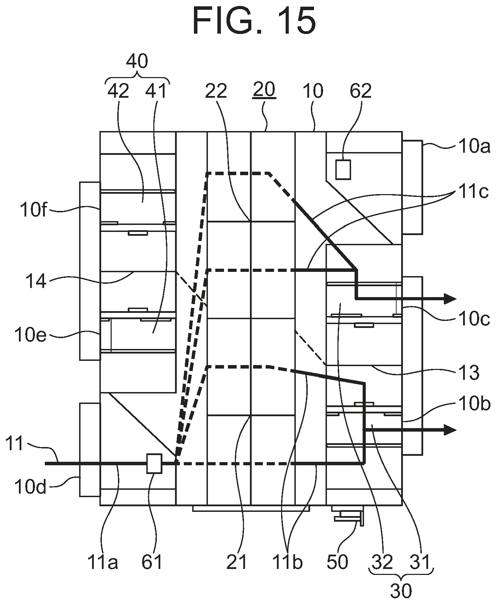

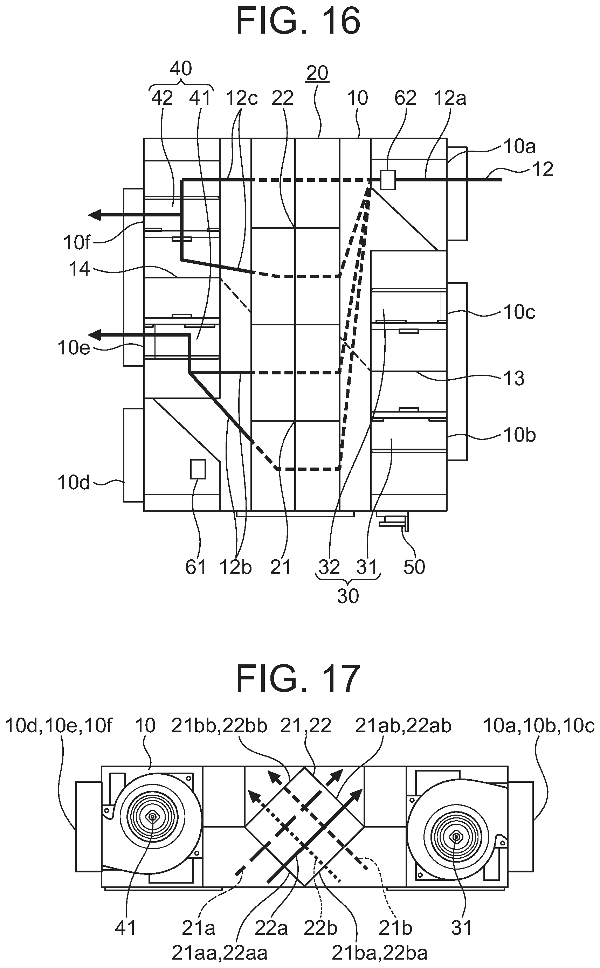

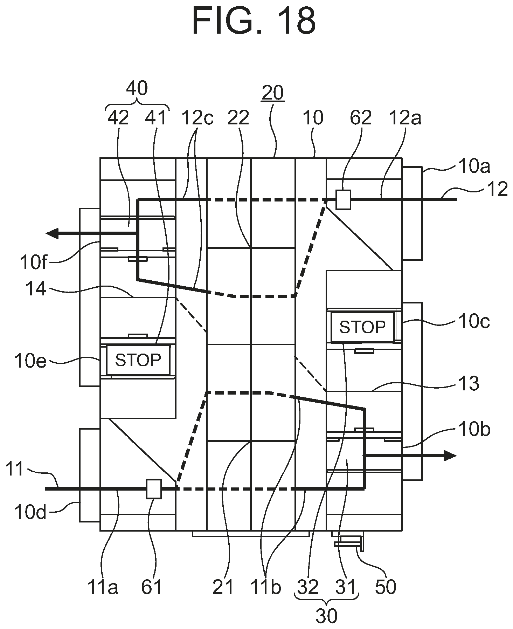

Next, FIG. 13 is a perspective view for illustrating an internal component of a heat exchange ventilation device according to a second embodiment. FIG. 14 is a side view for illustrating the internal component of FIG. 13. FIG. 15 is a plan view for illustrating the supply air passage 11 in the heat exchange ventilation device of FIG. 13. FIG. 16 is a plan view for illustrating the exhaust air passage 12 in the heat exchange ventilation device of FIG. 13. FIG. 17 is a cross-sectional view for illustrating flows of the supply-side air and the discharge-side air in the heat exchange device 20 of FIG. 13. FIG. 18 is a plan view for illustrating a flow of the supply-side air and a flow of the discharge-side air in the normal ventilation mode in the second embodiment.

In the first embodiment, both of the supply-side air blowing device 30 and the discharge-side air blowing device 40 are arranged in one of two regions in the casing 10 separated by the heat exchange device 20. In contrast, in the second embodiment, the supply-side air blowing device 30 is arranged in one of the two regions in the casing 10 separated by the heat exchange device 20, and the discharge-side air blowing device 40 is arranged in the other of the two regions.

Other configurations and operations in the second embodiment are similar or identical to those in the first embodiment. Effects similar to those in the first embodiment can be obtained also by such a configuration.

### Third Embodiment

Next, a heat exchange ventilation device according to a third embodiment is described. In the heat exchange ventilation device of the third embodiment, an air blowing capacity setting value which is a value regarding an air blowing capacity of the first supply air blower 31 is set in the control device 50. The air blowing capacity setting value is set to an upper limit value of the air blowing capacity of the first supply air blower 31 or a value close to the upper limit value. In the normal ventilation mode, the control device 50 monitors whether or not a required supply amount of the supply-side air to the indoor area is equal to or less than the air blowing capacity setting value.

In the normal ventilation mode, when the required supply amount of the supply-side air to the indoor area exceeds the air blowing capacity setting value, the control device 50 operates the second supply air blower 32 and the first exhaust air blower 41 at a speed lower than that in the heat exchange ventilation mode. That is, the control device 50 operates the first supply air blower 31 and the second exhaust air blower 42 at a high speed, and operates the second supply air blower 32 and the first exhaust air blower 41 at a low speed. In this manner, an insufficient supply amount of the supply-side air is supplemented.

Other configurations and operations in the third embodiment are similar or identical to those in the first embodiment or the second embodiment. Effects similar to those in the first embodiment can be obtained also by such a configuration. In addition, in the normal ventilation mode, it is possible to sufficiently maintain the supply amount of the supply-side air to the indoor area while suppressing an amount of heat exchange between the supply-side air and the discharge-side air.

### Fourth Embodiment

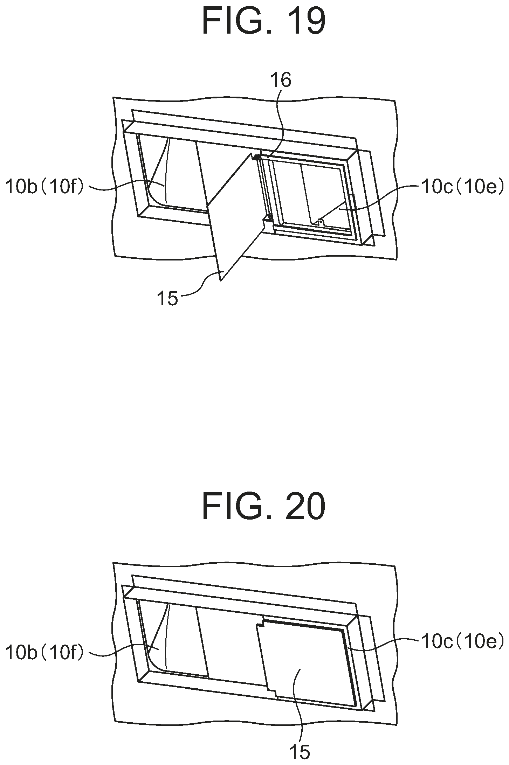

Next, FIG. 19 is a perspective view for illustrating a main part of a heat exchange ventilation device according to a fourth embodiment. In the heat exchange ventilation device of the fourth embodiment, a shutter 15 is provided in each of the second indoor air supply port 10c which is an air outlet port of the second downstream air supply passage 11c to the indoor area, and the first outdoor exhaust port 10e which is an air outlet port of the first downstream exhaust passage 12b to the outdoor area.

When the second supply air blower 32 and the first exhaust air blower 41 are stopped in the normal ventilation mode, each of the second indoor air supply port 10c and the first outdoor exhaust port 10e is closed by the shutter 15 as illustrated in FIG. 20.

Each shutter 15 opens and closes by rotating about a vertical shaft 16. Each shutter 15 is closed by a wind pressure of the supply-side air from the first indoor air supply port 10b and a wind pressure of the discharge-side air from the second outdoor exhaust port 10f. Further, each shutter 15 is opened by a wind pressure of the supply-side air from the second indoor air supply port 10c and a wind pressure of the discharge-side air from the first outdoor exhaust port 10e.

Other configurations and operations in the fourth embodiment are similar or identical to those in the first embodiment, the second embodiment, or the third embodiment. Effects similar to those in the first embodiment are obtained also by such a configuration.

Further, when the second supply air blower 32 and the first exhaust air blower 41 are stopped in the normal ventilation mode, each of the second indoor air supply port 10c and the first outdoor exhaust port 10e is closed by the shutter 15.

Accordingly, a backflow of air from the second indoor air supply port 10c to the second downstream air supply passage 11c and a backflow of air from the first outdoor exhaust port 10e to the first downstream exhaust passage 12b are suppressed. In this manner, air circulation in the casing 10 is suppressed, and a decrease in supply amount of the supply-side air and a decrease in discharge amount of the discharge-side air are suppressed.

Further, reverse rotation of blades of the second supply air blower 32 and blades of the first exhaust air blower 41 due to the backflow of air is suppressed. In this manner, the second supply air blower 32 and the first exhaust air blower 41 can be restarted smoothly. Further, generation of electromotive force in a DC motor of each of the second supply air blower 32 and the first exhaust air blower 41 is suppressed, and thus adverse effects on a substrate of each DC motor and a substrate of the control device 50 can be prevented.

Further, each shutter 15 opens and closes by a wind pressure. Accordingly, the second indoor air supply port 10c and the first outdoor exhaust port 10e can be opened and closed with a simple configuration.

Further, each shutter 15 opens and closes by rotating about the vertical shaft 16. Accordingly, each shutter 15 can be easily opened and closed with a small force.

Each shutter 15 may be an electric shutter. An electric shutter is, for example, a shutter that opens and closes by a driving force of a geared motor or a stepping motor. In this case, the second indoor air supply port 10c and the first outdoor exhaust port 10e can be opened and closed at a more appropriate timing and more reliably.

### Fifth Embodiment

Next, a heat exchange ventilation device according to a fifth embodiment is described. In the fifth embodiment, the control device 50 operates all of the first supply air blower 31, the second supply air blower 32, the first exhaust air blower 41, and the second exhaust air blower 42 in the heat exchange ventilation mode.

Further, in the normal ventilation mode, the control device 50 operates the first supply air blower 31 and the second exhaust air blower 42 at a speed higher than that in the heat exchange ventilation mode, and operates the second supply air blower 32 and the first exhaust air blower 41 at a speed lower than that in the heat exchange ventilation mode.

Other configurations and operations in the fifth embodiment are similar or identical to those in the first embodiment or the second embodiment.

In the heat exchange ventilation device as described above, the first heat exchanger 21 and the second heat exchanger 22 are arranged in parallel to each other. Further, the supply-side air blowing device 30 includes the first supply air blower 31 and the second supply air blower 32. Further, the discharge-side air blowing device 40 includes the first exhaust air blower 41 and the second exhaust air blower 42.

Further, the supply air passage 11 includes the first downstream air supply passage 11b and the second downstream air supply passage 11c. The exhaust air passage 12 includes the first downstream exhaust passage 12b and the second downstream exhaust passage 12c.

Further, the control device 50 operates the first supply air blower 31 and the second exhaust air blower 42 at a speed higher than that in the heat exchange ventilation mode, and operates the second supply air blower 32 and the first exhaust air blower 41 at a speed lower than that in the heat exchange ventilation mode.

Thus, it is not required to secure an air passage that does not pass through the heat exchange device 20, and a mechanism for switching to that air passage. Accordingly, it is possible to suppress an increase in the size of the entire device while suppressing an increase in the load on the air conditioner.

Further, it is also possible to suppress an increase in the number of components and suppress an increase in pressure loss.

In addition, it is possible to sufficiently maintain the supply amount of the supply-side air to the indoor area while suppressing the amount of heat exchange between the supply-side air and the discharge-side air.

In the first to fifth embodiments, the outdoor temperature sensor 61 is only required to be capable of detecting the outdoor temperature, and may be, for example, provided outdoors separately from the heat exchange ventilation device.

Further, in the first to fifth embodiments, the indoor temperature sensor 62 is only required to be capable of detecting the indoor temperature, and may be, for example, provided indoors separately from the heat exchange ventilation device.

Further, in the first to fifth embodiments, information on the indoor temperature and information on the outdoor temperature may be received from an external device.

Further, in the first to fifth embodiments, the operation mode is switched based on the operation state of the air conditioner, the indoor temperature, and the outdoor temperature, but may be switched based on other information, such as seasonal information.

Further, in the first to fifth embodiments, the operation mode may be switched manually.

Further, in the first to fifth embodiments, each of the supply air passage 11 and the exhaust air passage 12 may be branched into three or more passages.

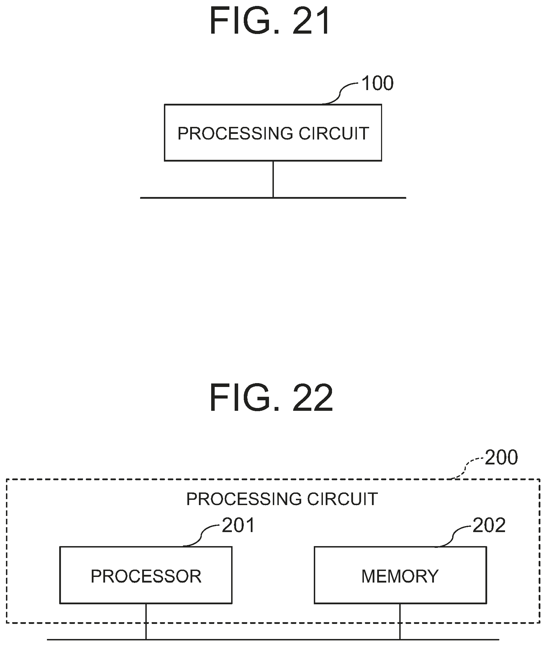

Further, each of the functions of the control device 50 according to the first to fifth embodiments is implemented by a processing circuit. FIG. 21 is a configuration diagram for illustrating a first example of the processing circuit for implementing each of the functions of the control device 50 according to the first to fifth embodiments. A processing circuit 100 of the first example is dedicated hardware.

Further, the processing circuit 100 corresponds to, for example, a single circuit, a complex circuit, a programmed processor, a processor for a parallel program, an application specific integrated circuit (ASIC), a field programmable gate array (FPGA), or a combination thereof. Further, the functions of the control device 50 may be respectively implemented by individual processing circuits 100, or the functions may be collectively implemented by the processing circuit 100.

Further, FIG. 22 is a configuration diagram for illustrating a second example of the processing circuit for implementing each of the functions of the control device 50 according to the first to fifth embodiments. A processing circuit 200 of the second example includes a processor 201 and a memory 202.

In the processing circuit 200, each of the functions of the control device 50 is implemented by software, firmware, or a combination of software and firmware. The software and the firmware are described as programs to be stored in the memory 202. The processor 201 reads out and executes the programs stored in the memory 202, to thereby implement each of the functions.

The programs stored in the memory 202 can also be regarded as programs for causing a computer to execute the procedure or method of each of the above-mentioned units. In this case, the memory 202 corresponds to, for example, a nonvolatile or volatile semiconductor memory, such as a random access memory (RAM), a read only memory (ROM), a flash memory, an erasable programmable read only memory (EPROM), or an electrically erasable and programmable read only memory (EEPROM). Further, a magnetic disk, a flexible disk, an optical disc, a compact disc, a mini disc, or a DVD may also correspond to the memory 202.

The function of each of the above-mentioned units may be implemented partially by dedicated hardware, and partially by software or firmware.

In this way, the processing circuit can implement the function of each of the above-mentioned units by hardware, software, firmware, or a combination thereof.

### Reference Signs List

10 casing, 10c second indoor air supply port, 10e first outdoor exhaust port, 11 supply air passage, 11b first downstream air supply passage, 11c second downstream air supply passage, 12 exhaust air passage, 12b first downstream exhaust passage, 12c second downstream exhaust passage, 15 shutter, 16 shaft, 20 heat exchange device, 21 first heat exchanger, 22 second heat exchanger, 30 supply-side air blowing device, 31 first supply air blower, 32 second supply air blower, 40 discharge-side air blowing device, 41 first exhaust air blower, 42 second exhaust air blower, 50 control device.

## Claims

1. A heat exchange ventilation device, comprising:
a casing in which a supply air passage from an outdoor area to an indoor area and an exhaust air passage from the indoor area to the outdoor area are formed;
a heat exchange device which is provided in the casing, and is configured to perform heat exchange between supply-side air which is air flowing through the supply air passage and discharge-side air which is air flowing through the exhaust air passage;
a supply-side air blowing device provided in the supply air passage;
a discharge-side air blowing device provided in the exhaust air passage; and
a control device configured to control the supply-side air blowing device and the discharge-side air blowing device by a plurality of operation modes including a heat exchange ventilation mode and a normal ventilation mode,
wherein the heat exchange device includes a first heat exchanger and a second heat exchanger which are arranged in parallel to each other,
wherein the supply-side air blowing device includes:
a first supply air blower; and
a second supply air blower,
wherein the discharge-side air blowing device includes:
a first exhaust air blower; and
a second exhaust air blower,
wherein the supply air passage includes:
a first downstream air supply passage formed between the first heat exchanger and the first supply air blower;
and a second downstream air supply passage formed between the second heat exchanger and the second supply air blower independently of the first downstream air supply passage,
wherein the exhaust air passage includes:
a first downstream exhaust passage formed between the first heat exchanger and the first exhaust air blower; and
a second downstream exhaust passage formed between the second heat exchanger and the second exhaust air blower independently of the first downstream exhaust passage, and
wherein the control device is configured to control the first supply air blower, the second supply air blower, the first exhaust air blower, and the second exhaust air blower so that an amount of intersection between the supply-side air and the discharge-side air in each of the first heat exchanger and the second heat exchanger is smaller in the normal ventilation mode than in the heat exchange ventilation mode.

2. The heat exchange ventilation device according to claim 1, wherein the control device is configured to:
in the heat exchange ventilation mode, operate the first supply air blower, the second supply air blower, the first exhaust air blower, and the second exhaust air blower; and
in the normal ventilation mode, operate the first supply air blower and the second exhaust air blower, and stop the second supply air blower and the first exhaust air blower.

3. The heat exchange ventilation device according to claim 2, wherein the control device is configured to increase, when the operation mode is changed from the heat exchange ventilation mode to the normal ventilation mode, each of an air flow rate by the first supply air blower and an air flow rate by the second exhaust air blower, as compared to the air flow rate before change.

4. The heat exchange ventilation device according to claim 3, wherein the control device is configured to increase, when the operation mode is changed from the heat exchange ventilation mode to the normal ventilation mode, each of the air flow rate by the first supply air blower and the air flow rate by the second exhaust air blower to twice the air flow rate before the change.

5. The heat exchange ventilation device according to claim 2 or 3,
wherein, in the control device, an air blowing capacity setting value which is a value regarding an air blowing capacity of the first supply air blower is set, and
wherein the control device is configured to operate, in the normal ventilation mode, when a required supply amount of the supply-side air exceeds the air blowing capacity setting value, the second supply air blower and the first exhaust air blower at a speed lower than a speed in the heat exchange ventilation mode.

6. The heat exchange ventilation device according to any one of claims 2 to 5, further comprising a shutter provided in each of a second indoor air supply port which is an air outlet port of the second downstream air supply passage to the indoor area and a first outdoor exhaust port which is an air outlet port of the first downstream exhaust passage to the outdoor area, and
wherein each of the second indoor air supply port and the first outdoor exhaust port is closed by the shutter when the second supply air blower and the first exhaust air blower are stopped in the normal ventilation mode.

7. The heat exchange ventilation device according to claim 6, wherein the shutter is configured to open and close by a wind pressure.

8. The heat exchange ventilation device according to claim 7, wherein the shutter is configured to open and close by rotating about a vertical shaft.

9. The heat exchange ventilation device according to claim 6, wherein the shutter is an electric shutter.

10. The heat exchange ventilation device according to claim 1, wherein the control device is configured to:
in the heat exchange ventilation mode, operate the first supply air blower, the second supply air blower, the first exhaust air blower, and the second exhaust air blower; and
in the normal ventilation mode, operate the first supply air blower and the second exhaust air blower at a speed higher than a speed in the heat exchange ventilation mode, and operate the second supply air blower and the first exhaust air blower at a speed lower than a speed in the heat exchange ventilation mode.
